Europäisches Patentamt

European Patent Office

Office européen des brevets

(11) Publication number: **0 083 167**
**B1**

(12) **EUROPEAN PATENT SPECIFICATION**

(45) Date of publication of patent specification: **05.03.86**

(51) Int. Cl.⁴: **B 32 B 7/02, B 32 B 5/18**

(21) Application number: **82306561.0**

(22) Date of filing: **09.12.82**

(54) Foam-film coextruded plastic bags.

(30) Priority: **30.12.81 US 335979**

(43) Date of publication of application:
**06.07.83 Bulletin 83/27**

(45) Publication of the grant of the patent:
**05.03.86 Bulletin 86/10**

(84) Designated Contracting States:
**BE DE FR GB IT NL**

(56) References cited:
**AU-B- 513 796**
**US-A-3 824 139**
**US-A-3 855 376**

(73) Proprietor: **MOBIL OIL CORPORATION**
**150 East 42nd Street**
**New York New York 10017 (US)**

(72) Inventor: **Canterino, Peter John**
**39 Mary Drive**
**Towaco New Jersey 07082 (US)**
Inventor: **Moore, Neal Edward**
**50 Reservation Road**
**Sunderland Massachusetts 01373 (US)**

(74) Representative: **West, Alan Harry et al**
**Mobil Court 3 Clements Inn**
**London WC2A 2EB (GB)**

Courier Press, Leamington Spa, England.

### Description

This invention relates to a plastics bag having a non-foamed ply and a foamed ply.

Most waste bags are made from thin films (0.025—0.050 mm). In pigmenting the bags, it is difficult to make them opaque. In coextrusion, each face of the film is only a fraction of the total thickness (e.g. inner ply 75%, outer ply 25%). When an attempt is made to color each face a different color, one color may show through the other as it is impractical to use a high loading colorant in films of this thickness.

Certain problems associated with various prior art plastics bag structures may be described by way of example. For instance, tall kitchen waste bags are often used as liners for waste receptacles which may be white or other light shades of color. In such use the interiors of the bags are often folded over the top of the kitchen waste receptacle, thereby exposing for view the inner surface of the plastics bag over the lip of the receptacle. If the receptacle is white in color, it would be desirable for the exposed surface of the bag also to be white. Accordingly, it is desirable to provide waste bags with a light colored (e.g. white) interior or innermost surface.

However, when the liner of the above-mentioned kitchen waste receptacle becomes filled, the liner may then be removed from the receptacle and the top sealed to present a sealed bag containing waste materials. Since it is undesirable for the contents of the bag to be visible through the exterior surface of the bag structure, it is desirable for the bag to have a sufficient degree of opacity to obscure from vision the contents of the bag. In this regard, it is noted that darker colors, such as green or brown, tend to visually mask the interior contents of the bag more efficiently than lighter colors such as white or yellow. Accordingly, it is desirable to provide a waste bag structure having at least one ply which has the opacity normally associated with darker colored plies. Furthermore, when a filled waste bag is placed out-of-doors for sanitation removal, it is desirable that the bag be relatively non-visible or inconspicuous in the environment. This result is often better achieved when the visible exterior surface of the filled bag is relatively dark in color.

Although U.S. Patent 3,824,139 describes laminates of foamed and film layers, the foamed layer is formed with cavities or voids which extend through the foamed layer to expose the film layer. Carrier bags formed from that laminate have the foamed layer on the outside of the bag so that the inner film layer is partially exposed through the cavities or voids in the outer foamed layer.

There is therefore still a need to provide plastics bags which are opaque and have at least one light-colored ply or which have plies of two different colors. However, as indicated previously, such a result is difficult to achieve simply with pigment adjustments, because the color of darker plies may tend to show through lighter-colored plies.

According to the present invention, however, there is provided a plastics bag structure consisting of two plies of coextruded and oriented thermoplastic film, wherein the exterior ply comprises a dark-colored, non-foamed material and the interior ply comprises an opaque, light-colored foamed material, the dark color of the outer ply being capable of masking the color of the inner ply and the inner ply being sufficiently opaque substantially to prevent the dark color of the outer ply showing through the inner ply. Such a two-ply structure is suitably formed by a blown film process analogous to known processes for forming bag structures which differs from those of the present invention in that they do not contain foamed plies. One or more suitable foaming agents are therefore incorporated into the melt stream corresponding to the foamed ply. Examples of such foaming agents, sufficient foaming amounts of such agents and methods of foaming with such agents are described in U.S. Patent 3,893,957.

The coextruded thermoplastic films from which the bag structures of the invention are formed may be of the same or different composition but are preferably composed of polyolefins. Preferred polyolefins are ethylene homopolymers and copolymers (for example, formed from at least 75% by weight of ethylene monomers). A particularly preferred form of polyethylene is linear low density polyethylene, which has the strength characteristics suitable for making waste bags, for example, tall trash bags. Examples of linear low density polyethylenes are described in U.S. Patent 4,076,698.

Bags in accordance with the invention may have an overall thickness of from 0.013 to 0.13 mm, more preferably from 0.025 to 0.075 mm. The thickness of the foamed ply may be, for example, from 30 to 85% of the thickness of the bag.

In accordance with the invention, the outer unfoamed ply of the bag structure is of a dark color, preferably brown or green, that is capable of masking the color of the inner foamed ply, which is preferably white or yellow.

Also, the inner foamed ply is sufficiently opaque substantially to prevent the dark color of the outer ply showing through the inner ply. Because of the large difference in refractive index between air (or other gas) and polymer, good "hiding power" is obtained from the foamed ply. Thus, the lighter color of the foamed ply is still capable of masking the color of the darker ply.

Furthermore, because of the way blown films are made, considerable orientation is obtained in the final blown film. More particularly, this orientation arises as a result of the blown film process, whereby melt streams expand as they pass through the extrusion orifice to form a tubular coextruded film. This orientation may cause the film to take on a more pleasing sheen or appearance.

## Claims

1. A plastics bag structure consisting of two plies of coextruded and oriented thermoplastic film, characterised in that the exterior ply comprises a dark-colored, non-foamed material and the interior ply comprises an opaque, light-coloured foamed material, the dark color of the outer ply being capable of masking the color of the inner ply and the inner ply being sufficiently opaque substantially to prevent the dark color of the outer ply showing through the inner ply.

2. A plastics bag structure according to claim 1, wherein both plies are of polyolefin.

3. A plastics bag structure according to claim 2, wherein both plies are of polyethylene.

4. A plastics bag structure according to any one of claims 1 to 3, wherein the plies together have a thickness of 0.013 to 0.13 mm.

5. A plastics bag structure according to claim 4, wherein the plies together have a thickness of 0.025 to 0.075 mm.

6. A plastics bag structure according to any one of claims 1 to 5, wherein the foamed inner ply has a thickness of 30 to 85% of that of both plies together.

7. A plastics bag structure according to any one of claims 1 to 6, wherein the inner foamed ply is white or yellow and the outer non-foamed ply is green or brown.

## Patentansprüche

1. Kunststoffsackstruktur, bestehend aus zwei Lagen eines coextrudierten und orientierten thermoplastischen Films, dadurch gekennzeichnet, daß die äußere Lage ein dunkel gefärbtes, nicht geschäumtes Material und die innere Lage ein undurchsichtiges, hell gefärbtes geschäumtes Material umfassen, wobei die dunkle Farbe der aüßeren Lage in der Lage ist, die Farbe der inneren Lage abzudecken und die innere Lage ausreichend undurchsichtig ist, um zu verhindern, daß die dunkle Farbe der äußeren Lage durch die innere Lage durchdringt.

2. Kunststoffsackstruktur nach Anspruch 1, worin beide Lagen aus Polyolefin bestehen.

3. Kunststoffsackstruktur nach Anspruch 2, worin beide Lagen aus Polyäthylen bestehen.

4. Kunststoffsackstruktur nach einem der Ansprüche 1 bis 3, worin die Lagen zusammen einen Dicke von 0,013 bis 0,13 mm haben.

5. Kunststoffsackstruktur nach Anspruch 4, worin die Lagen zusammen eine Dicke von 0,025 bis 0,075 mm haben.

6. Kunststoffsackstruktur nach einem der Ansprüche 1 bis 5, worin die geschäumte innere Lage eine Dicke von 30 bis 85% der Dicke der beiden zusammengenommenen Lagen aufweist.

7. Kunststoffsackstruktur nach einem der Ansprüche 1 bis 6, worin die innere geschäumte Lage weiß oder gelb und die äußere nicht geschäumte Lage grün oder braun ist.

## Revendications

1. Sac en matière plastique comprenant deux couches de film thermoplastique orienté et coextrudé, caractérisé en ce que la couche extérieure comprend une matière non expansée de couleur sombre et la couche intérieure comprend une matière expansée opaque de couleur claire, la couleur sombre de la couche externe étant capable de masquer la couleur de la couche interne et la couche interne étant suffisamment opaque pour éviter pratiquement que la couleur sombre de la couche externe n'apparaîsse au travers de la couche interne.

2. Sac en matière plastique selon la revendication 1, dans lequel les deux couches sont en polyoléfine.

3. Sac en matière plastique selon la revendication 2, dans lequel les deux couches sont en polyéthyléne.

4. Sac en matière plastique selon l'une quelconque des revendications 1 à 3, dans lequel l'ensemble des couches a une épaisseur de 0,013 à 0,13 mm.

5. Sac en matière plastique selon la revendication 4, dans lequel l'ensemble des couches a une épaisseur de 0,025 à 0,075 mm.

6. Sac en matière plastique selon l'une quelconque des revendications 1 à 5, dans lequel la couche interne expansée a une épaisseur représentant 30 à 85% de celle de l'ensemble des deux couches.

7. Sac en matière plastique selon l'une quelconque des revendications 1 à 6, dans lequel la couche expansée interne est blanche ou jaune et la couche non expansée externe est verte ou brune.